# EUROPEAN PATENT APPLICATION

(11) **EP 2 432 272 A1**
(43) Date of publication of application: **21.03.2012**
(21) Application number: 10775007.7
(22) Date of filing: 14.05.2010
(51) Int. Cl.: H04W 24/06, H04W 16/22, H04W 72/04

(54) **SIMULATOR DEVICE AND SIMULATING METHOD**

(30) Priority: 14.05.2009 JP 2009118109
(71) Applicant: NTT DOCOMO, INC., Chiyoda-ku Tokyo 100-6150 (JP)
(72) Inventor: SHIMOMURA, Tetsuto, Tokyo 100-6150 (JP); OKUBO, Naoto, Tokyo 100-6150 (JP); ISHII, Hiroyuki, Tokyo 100-6150 (JP)
(74) Representative: HOFFMANN EITLE
(86) International application number: PCT/JP2010/058227
(87) International publication number: WO 2010/131750

(57) **Abstract**

A radio base station according to the present invention comprising : a simulator device, including a downlink signal output unit configured to transmit a downlink signal for a first cell and transmit a downlink signal for a second cell, in the form of a simulation signal, to a mobile station, in which the downlink signal output unit is configured to shift the lead position of a radio frame from which to transmit the downlink signal for a first cell, and the lead position of a radio frame from which to transmit the downlink signal for a second cell.

## Description

### TECHNICAL FIELD

The present invention relates to a simulator device and a simulation method.

### BACKGROUND ART

A radio communication scheme of an LTE (Long Term Evolution) scheme assumes the use of a simulator device configured to simulate the operation of a radio base station eNB of the LTE scheme, for the purpose of verifying if the operation of a mobile station UE supported by the LTE scheme matches the content of the 3GPP standard.

In general, the simulator device needs to include a function of simulating the operation in a plurality of cells in order to simulate the operation, during cell reselection and the operation during handover.

In order to determine the cell reselection destination cells and handover destination cells, the mobile station UE is configured to perform a measurement process (Measurement) on the received power of a downlink signal in a plurality of cells.

### SUMMERY OF THE INVENTION

### PROBLEMS TO BE SOLVED BY THE INVENTION

According to 3GPP, during the above-mentioned measurement process of the mobile station UE, for example, as shown in Table 9.1.2.2-1 of TS36.133, the relative accuracy of measurement (A) among the cells using the same frequency is desired to be "±3 dB".

Note that as a prerequisite (B) for satisfying the said accuracy of measurement, for example, the fulfillment of the condition "Es/Iot>-6dB" is stipulated. Here, "Es" is the desired received power of each resource element of the said cell, and "Iot" is the interference power exerted on the unit resource element (including the noise and interference power from other cells).

Furthermore, when simultaneously simulating a plurality of cells, the simulator device has an uncertainty (C) of approximately "±1 dB", for example, with respect to the relative transmission power among the cells.

Thus, when the simulator device simultaneously simulates a plurality of cells, in order to accurately verify the operation during handover in the mobile station UE, the transmission power of the downlink signal for each cell must be determined in consideration of the above-mentioned accuracy of measurement (A) and uncertainty (C) in such way that the reversal phenomenon does not occur in the magnitude correlation of the received power among the cells measured in the mobile station UE. In other words, a large difference must be applied between the transmission power of the downlink signal for each cell.

However, if a large difference is applied to the transmission power of the downlink signal among the cells using the same frequency, the cells with less transmission power exhibit "Es<<Iot", and fulfillment of the above precondition (B) becomes difficult.

If the precondition (B) is not fulfilled, the fulfillment of the accuracy of measurement (A) of the mobile station UE for the said cells cannot be guaranteed, and therefore, the execution of the expected operation during cell reselection and during handover cannot be guaranteed, which then becomes a problem.

Therefore, the present invention is intended to overcome the above-described problems. An object of the present invention is to provide a simulator device and a simulation method by which it is possible to verify the operation of a mobile station supporting the LTE scheme.

### MEANS FOR SOLVING THE PROBLEMS

A gist of a first characteristic of the present invention is a simulator device, including a downlink signal output unit configured to transmit a downlink signal for a first cell and transmit a downlink signal for a second cell, in the form of a simulation signal, to a mobile station, in which the downlink signal output unit is configured to shift the lead position of a radio frame from which to transmit the downlink signal for a first cell, and the lead position of a radio frame from which to transmit the downlink signal for a second cell.

A gist of a second characteristic of the present invention is a simulator device, including a downlink signal output unit, configured to transmit a downlink signal for a first cell including a downlink control signal and a downlink data signal, and to transmit a downlink signal for a second cell including a downlink control signal and a downlink data signal, in the form of a simulation signal, to a mobile station, in which the downlink signal output unit is configured to align the boundary of a subframe in a first radio frame from which to transmit the downlink signal for a first cell, and the boundary of a subframe in a second radio frame from which to transmit the downlink signal for a second cell, and the downlink signal output unit is configured to make the number of OFDM symbols used for transmitting the downlink control signal and the downlink data signal in each subframe within the first radio frame, equal to the number of OFDM symbols used for transmitting the downlink control signal and the downlink data signal in each subframe within the second radio frame.

A gist of a third characteristic of the present invention is a simulator device, including a physical cell ID assignment unit configured to assign a physical cell ID to a first cell and a second cell and a downlink signal output unit configured to transmit the downlink signal for a first cell by a first frequency direction resource determined by a physical cell ID imparted to the first cell, and to transmit the downlink signal for a second cell by a second frequency direction resource determined by a physical cell ID imparted to the second cell, to a mobile station, in the form of a simulation signal, in which the physical cell ID assignment unit is configured to assign the physical cell ID to the first cell and the second cell so that the first frequency direction resource and the second frequency direction resource do not overlap.

A gist of a fourth characteristic of the present invention is a simulator device, including a resource assignment unit configured to assign a first frequency direction resource by which to transmit a downlink signal for a first cell, and a second frequency direction resource by which to transmit a downlink signal for a second cell and a downlink signal output unit configured to transmit the downlink signal for a first cell by the first frequency direction resource, and the downlink signal for a second cell by the second frequency direction resource, to a mobile station, in the form of a simulation signal, in which the resource assignment unit is configured to divide the frequency direction resources that can be used for transmitting the downlink signal for a first cell and the downlink signal for a second cell, in the frequency directions into a plurality of groups, and to assign one of a plurality of divided groups, as the first frequency direction resource and the second frequency direction resource, and the resource assignment unit is configured such that the group assigned as the first frequency direction resource is differed from the group assigned as the second frequency direction resource.

A gist of a fifth characteristic of the present invention is a simulator device, including a downlink signal output unit configured to transmit at least one broadcast information for a first cell or a synchronization signal within a first predetermined period, and to transmit at least one broadcast information for a second cell or a synchronization signal within a second predetermined period, in the form of a simulation signal, to a mobile station, in which the downlink signal output unit is configured such that the transmission timing of the at least one broadcast information for a first cell or the synchronization signal, is differed from the transmission timing of the at least one broadcast information for a second cell or the synchronization signal.

A gist of a sixth characteristic of the present invention is a simulator device, including a downlink signal output unit configured to transmit broadcast information for a first cell within a first predetermined period, and to transmit a downlink signal for a second cell, in the form of a simulation signal, to a mobile station, in which the downlink signal output unit is configured to not transmit the downlink signal for a second cell at the transmission timing of the broadcast information for a first cell.

A gist of a seventh characteristic of the present invention is a simulator device, including a downlink signal output unit configured to transmit a downlink data signal for a specific cell via a physical downlink data channel, in the form of a simulation signal, to a mobile station, in which the downlink signal output unit is configured, to stop the transmission of the downlink signal via the physical downlink data channel, when there is no downlink data signal for a specific cell that should be transmitted.

A gist of an eighth characteristic of the present invention is a simulator device, including a resource assignment unit configured to assign, a first frequency direction resource by which to transmit a downlink data signal for a first cell, and a second frequency direction resource by which to transmit a downlink data signal for a second cell and a downlink signal output unit configured to transmit, the downlink data signal for a first cell by the first frequency direction resource, and the downlink data signal for a second cell by the second frequency direction resource, in the form of a simulation signal, to a mobile station, in which the resource assignment unit is configured to not assign a predetermined number of frequency direction resources centered on the frequency direction resource in the center, out of the frequency direction resources that can be used for transmitting the downlink signal for a first cell and the downlink signal for a second cell, as the first frequency direction resource and the second frequency direction resource.

A gist of a ninth characteristic of the present invention is a simulation method, including a step of transmitting a downlink signal for a first cell, and transmitting a downlink signal for a second cell, in the form of a simulation signal, to a mobile station, in which in this preceding step, the lead position of a radio frame from which to transmit the downlink signal for a first cell is shifted from the lead position of a radio frame from which to transmit the downlink signal for a second cell.

A gist of a tenth characteristic of the present invention is a simulation method, including a step of transmitting a downlink signal for a first cell including a downlink control signal and a downlink data signal, and transmitting a downlink signal for a second cell including a downlink control signal and a downlink data signal, in the form of a simulation signal, to a mobile station, in which in this preceding step, the boundary of a subframe in a first radio frame from which to transmit the downlink signal for a first cell, is aligned to the boundary of a subframe in a second radio frame from which to transmit the downlink signal for a second cell, and in this preceding step, the number of OFDM symbols used for transmitting the downlink control signal and the downlink data signal in each subframe within the first radio frame, is made equal to the number of OFDM symbols used for transmitting the downlink control signal and the downlink data signal in each subframe within the second radio frame.

A gist of an eleventh characteristic of the present invention is a simulation method, including a step A in which a physical cell ID is assigned to a first cell and a second cell and a step B in which the downlink signal for a first cell is transmitted by a first frequency direction resource determined by a physical cell ID imparted to the first cell, and the downlink signal for a second cell is transmitted by a second frequency direction resource determined by a physical cell ID imparted to the second cell, in the form of a simulation signal, to a mobile station, in which in this step A, the physical cell ID is assigned to the first cell and the second cell so that the first frequency direction resource and the second frequency direction resource do not overlap.

A gist of a twelfth characteristic of the present invention is a simulation method, including a step A of assigning a first frequency direction resource by which to transmit a downlink signal for a first cell, and a second frequency direction resource by which to transmit a downlink signal for a second cell and a step B of transmitting the downlink signal for a first cell by the first frequency direction resource, and transmitting the downlink signal for a second cell by the second frequency direction resource, in the form of a simulation signal, to a mobile station, in which in the step A, frequency direction resources that can be used for transmitting the downlink signal for a first cell and the downlink signal for a second cell, is divided in the frequency directions into a plurality of groups, and one of a plurality of divided groups is each assigned as the first frequency direction resource and the second frequency direction resource, and in the step A, the group assigned as the first frequency direction resource is differed from the group assigned as the second frequency direction resource.

A gist of a thirteenth characteristic of the present invention is a simulation method, comprising a step of transmitting at least one broadcast information for a first cell or a synchronization signal within a first predetermined period, and transmitting at least one broadcast information for a second cell or a synchronization signal within a second predetermined period, in the form of a simulation signal, to a mobile station, in which in this preceding step, the transmission timing of the at least one broadcast information for a first cell or the synchronization signal is differed from the transmission timing of the at least one broadcast information for a second cell or the synchronization signal.

A gist of a fourteenth characteristic of the present invention is a simulation method, comprising a step of transmitting the broadcast information for a first cell within a first predetermined period, and transmitting a downlink signal for a second cell, in the form of a simulation signal, to a mobile station, in which in this preceding step, the downlink signal for a second cell is not transmitted at the transmission timing of the broadcast information for a first cell.

A gist of a fifteenth characteristic of the present invention is a simulation method, comprising a step of transmitting a downlink data signal for a specific cell via a physical downlink data channel, in the form of a simulation signal, to a mobile station, in which in this preceding step, transmission of the downlink signal via the physical downlink data channel is stopped when there is no downlink data signal for a specific cell that should be transmitted.

A gist of a sixteenth characteristic of the present invention is a simulation method, including a step A of assigning a first frequency direction resource by which to transmit a downlink data signal for a first cell, and a second frequency direction resource by which to transmit a downlink data signal for a second cell and a step B of transmitting the downlink data signal for a first cell by the first frequency direction resource, and the downlink data signal for a second cell by the second frequency direction resource, in the form of a simulation signal, to a mobile station, in which in the step A, a predetermined number of frequency direction resources centered on the frequency direction resource in the center are not assigned, out of the frequency direction resources that can be used, for transmitting the downlink signal for a first cell and the downlink signal for a second cell, as the first frequency direction resource and the second frequency direction resource.

### EFFECT OF THE INVENTION

As described above, according to the present invention, it is possible to provide a simulator device and a simulation method by which it is possible to verify the operation of a mobile station supported by the LTE scheme.

### BRIEF DESCRIPTION OF THE DRAWINGS

[Fig. 1] Fig. 1 is a diagram showing an entire configuration of a mobile communication system according to the first embodiment.
[Fig. 2] Fig. 2 is a diagram explaining an operation of a function 1 in the simulator device according to the first embodiment of the present invention.
[Fig. 3] Fig. 3 is a diagram explaining an operation of the function 1 in the simulator device according to the first embodiment of the present invention.
[Fig. 4] Fig. 4 is a diagram explaining an operation of the function 1 in the simulator device according to the first embodiment of the present invention.
[Fig. 5] Fig. 5 is a diagram explaining an operation of the function 1 in the simulator device according to the first embodiment of the present invention.
[Fig. 6] Fig. 6 is a diagram explaining an operation of a function 2 in the simulator device according to the first embodiment of the present invention.
[Fig. 7] Fig. 7 is a diagram explaining an operation of the function 2 in the simulator device according to the first embodiment of the present invention.
[Fig. 8] Fig. 8 is a diagram explaining an operation of a function 3 in the simulator device according to the first embodiment of the present invention.
[Fig. 9] Fig. 9 is a diagram explaining an operation of the function 3 in the simulator device according to the first embodiment of the present invention.
[Fig. 10] Fig. 10 is a diagram explaining an operation of a function 4 in the simulator device according to the first embodiment of the present invention.
[Fig. 11] Fig. 11 is a diagram explaining an operation of the function 4 in the simulator device according to the first embodiment of the present invention.
[Fig. 12] Fig. 12 is a diagram explaining an operation of a function 5 in the simulator device according to the first embodiment of the present invention.
[Fig. 13] Fig. 13 is a diagram explaining an operation of the function 5 in the simulator device according to the first embodiment of the present invention.
[Fig. 14] Fig. 14 is a diagram explaining an operation of a function 6 in the simulator device according to the first embodiment of the present invention.
[Fig. 15] Fig. 15 is a diagram explaining an operation of the function 6 in the simulator device according to the first embodiment of the present invention.
[Fig. 16] Fig. 16 is a diagram explaining an operation of a function 7 in the simulator device according to the first embodiment of the present invention.
[Fig. 17] Fig. 17 is a diagram explaining an operation of a function 8 in the simulator device according to the first embodiment of the present invention.
[Fig. 18] Fig. 18 is a diagram explaining an operation of the function 8 in the simulator device according to the first embodiment of the present invention.
[Fig. 19] Fig. 19 is a diagram explaining an operation of when the functions 1 through 8 are running in the simulator device according to the first embodiment of the present invention.
[Fig. 20] Fig. 20 is a diagram showing an example of a combination of a physical channel or physical signal using each function in the simulator device according to the first embodiment of the present invention.

### BEST MODES FOR CARRYING OUT THE INVENTION

### (Simulator device according to first embodiment of the present invention)

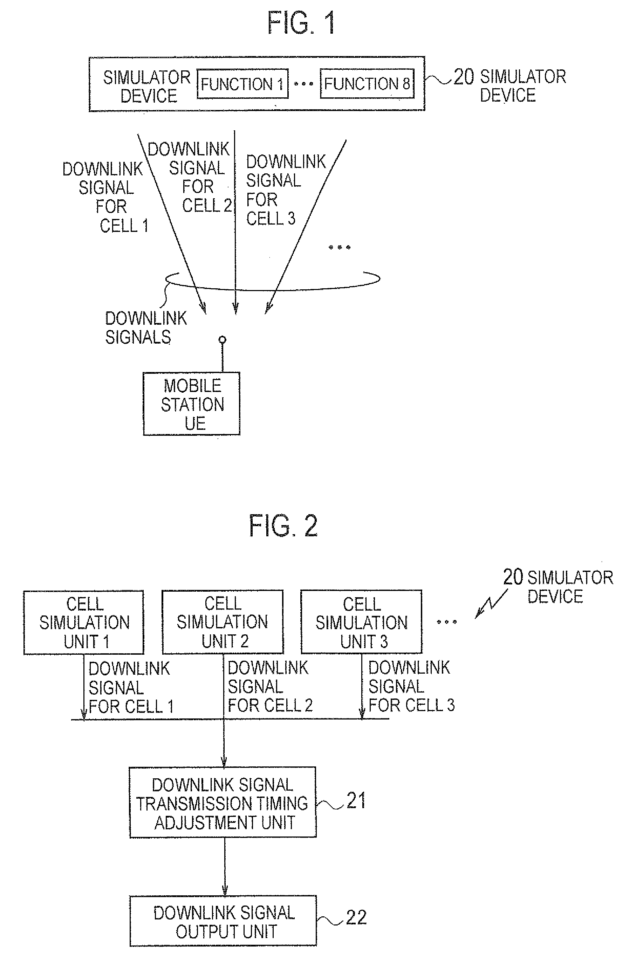

A simulator device 20 according to the first embodiment of the present invention is described with reference to Fig. 1 through Fig. 20.

As shown in Fig. 1, the simulator device 20 according to the present embodiment is configured to simulate an operation of a radio base station eNB of an LTE scheme (that is, an operation of a plurality of cells), and includes at least one of the functions 1 through 8 described later. Note that in the present embodiment, an example in which the simulator device 20 simulates an operation of cells 1 through 3 is explained, but the simulator 20 may also be configured to simulate the operation of a greater number of cells. Alternatively, the simulator 20 may also be configured to simulate an operation of a smaller number of cells.

The simulator device 20 is configured to transmit a downlink signal, including a downlink signal for a cell 1 through downlink signal for a cell 3, to a mobile station UE, in the form of a simulation signal.

The operation, of the functions 1 through 8 that can be included in the simulator device 20, is explained below.

### <Function 1>

As shown in Fig. 2, a function unit 1 is configured by cell simulation units 1 through 3, a downlink signal transmission timing adjustment unit 21, and a downlink signal output unit 22.

The cell simulation units 1 through 3 are configured to respectively generate a downlink signal for a cell 1 through a downlink signal for a cell 3, in the form of a simulation signal.

The downlink signal transmission timing adjustment unit 21 is configured to adjust the transmission timing of the downlink signal for a cell 1 through the downlink signal for a cell 3, and then synthesize these timings.

The downlink signal output unit 22 is configured to transmit a downlink signal, including the downlink signal for a cell 1 through the downlink signal for a cell 3 which are synthesized by the downlink signal transmission timing adjustment unit 21, to the mobile station UE.

Here, the downlink signal transmission timing adjustment unit 21 and the downlink signal output unit 22 may be separate units, or may be formed as a single unit.

Furthermore, it is summarized that the downlink signal output unit 22 (or the downlink signal transmission timing adjustment unit 21) is configured to shift a lead position of a radio frame from which to transmit a downlink signal for a cell 1, a lead position of a radio frame from which to transmit a downlink signal for a cell 2, and a lead position of a radio frame from which to transmit a downlink signal for a cell 3, upon receiving an instruction from the downlink signal transmission timing adjustment unit 21.

Here, the downlink signal output unit 22 (or the downlink signal transmission timing adjustment unit 21) may be configured to shift the lead position, of the radio frame from which to transmit the downlink signal for each cell, by only a predetermined number (for example, one) of subframes, or may be configured to shift the lead position of the radio frame from which to transmit the downlink signal for each cell by only a predetermined number (for example, one) of OFDM symbols.

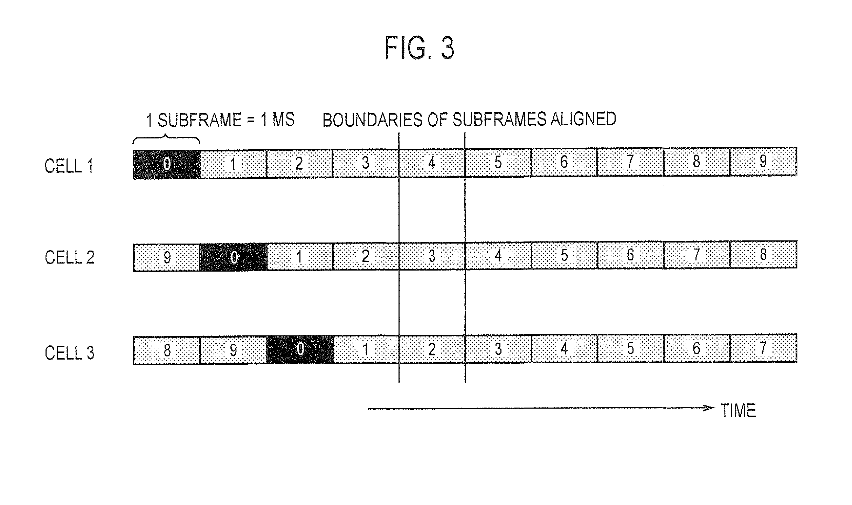

Fig. 3 shows an example when, each of the lead position of the radio frame from which to transmit a downlink signal for a cell 1 through the lead position of the radio frame from which to transmit a downlink signal for a cell 3 (that is, the boundary of each radio frame), is shifted by only one subframe. Here, subframes 0 through 9 constitute one radio frame, and subframe 0 is the lead position of each radio frame.

Furthermore, each subframe may be configured from two slots each. Furthermore, each slot may be configured from seven OFDM symbols each.

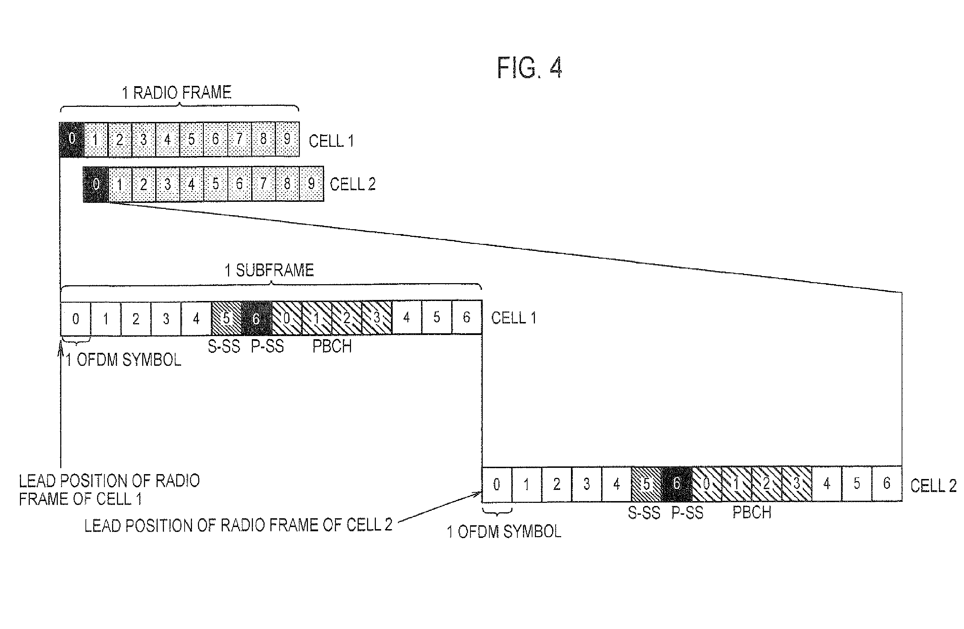

In the example of Fig. 4, the downlink signal for a cell 1 is configured in such way that, an S-SS (Secondary-Synchronization Signal) is transmitted by the fifth OFDM symbol of the first half of the slot in the subframe 0, a P-SS (Primary-Synchronization Signal) is transmitted by the sixth OFDM symbol subframe 6 of the first half of the slot in the subframe 0, and a signal for PBCH (Physical Broadcast Channel) is transmitted by the 0^{th} through third OFDM symbol of the latter half of the slot in the subframe 0.

Similarly, the downlink signal for a cell 2 is configured in such way that an S-SS is sent by the fifth OFDM symbol of the first half of the slot in the subframe 0, a P-SS is sent by the sixth OFDM symbol of the first half of the slot in the subframe 0, and a signal for PBCH is sent by the 0^{th} through third OFDM symbol of the latter half of the slot in the subframe 0.

Here, P-SS and S-SS are transmitted in a five-subframe cycle, and the signal for PBCH is transmitted in a 10-subframe cycle. Therefore, as described above, if the lead position of the radio frame from which to transmit a downlink signal for a cell 1 and the lead position of the radio frame from which to transmit a downlink signal for a cell 2 is shifted by only one subframe, the transmission timing of S-SS, P-SS, and the signal for PBCH shifts between cell 1 and cell 2, and the situation of mutual interference can be avoided.

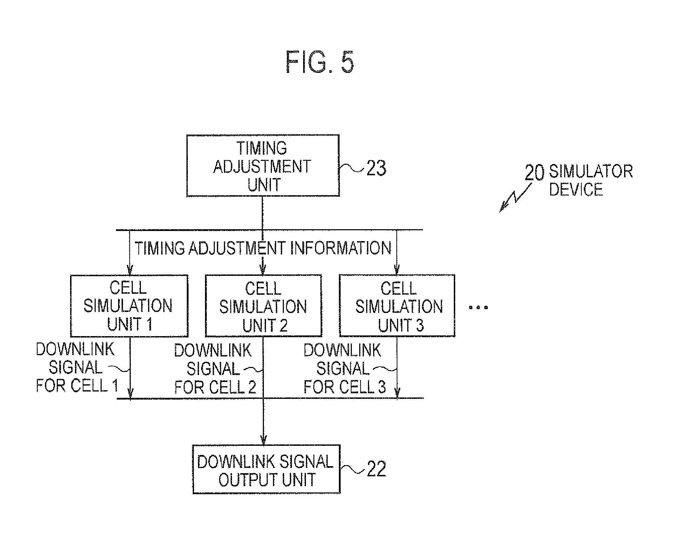

Note that as shown in Fig. 5, the function 1 includes a function unit 1, which is configured by a timing adjustment unit 23, cell simulation units 1 through 3, and a downlink signal output unit 22.

Here, the timing adjustment unit 23 is configured to adjust the timing of generation, of the downlink signal for a cell 1 through downlink signal for a cell 3, in each of the cell simulation units 1 through 3.

The timing adjustment unit 23 is configured, to adjust the timing of generation of the downlink signal for each cell, so that the lead position of the radio frame from which to transmit the downlink signal for each cell is shifted.

The cell simulation units 1 through 3 are configured, to generate the downlink signal for a cell 1 through downlink signal for a cell 3 at the timing specified based on the timing adjustment information received from the timing adjustment unit 23, and then to transmit these downlink signals to the downlink signal output unit 22.

The downlink signal output unit 22 is configured to synthesize the downlink signal for a cell 1 through downlink signal for a cell 3 transmitted by the cell simulation units 1 through 3, and then to transmit this signal to the mobile station UE as a simulation signal.

### <Function 2>

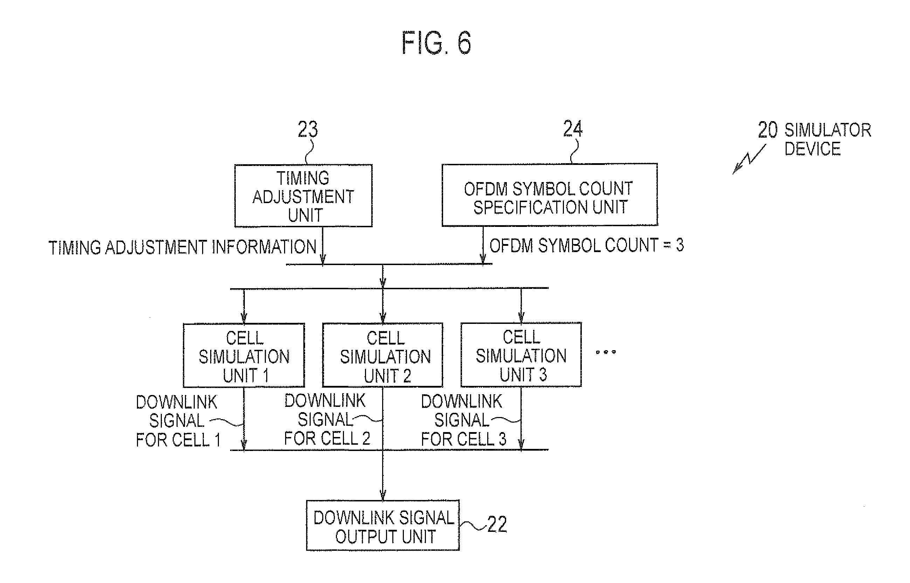

As shown in Fig. 6, the function unit 2 is configured by a timing adjustment unit 23, an OFDM symbol count specification unit 24, cell simulation units 1 through 3, and a downlink signal output unit 22.

The timing adjustment unit 23 is configured to adjust, the lead position of the subframes in the radio frame from which to transmit the downlink signal for each cell, that is, the boundary of the subframes in each radio frame.

Specifically, the timing adjustment unit 23 is configured to align the lead position of the subframes in the radio frame from which to transmit the downlink signal for each cell. In other words, the timing adjustment unit 23 is configured to align the boundary of the subframes in each radio frame.

The OFDM symbol count specification unit 24 is configured to specify the number of OFDM symbols used, to transmit a signal (downlink control signal) for PDCCH (Physical Downlink Control Channel) and a signal (downlink data signal) for PDSCH (Physical Downlink Shared Channel), in each subframe of each radio frame.

Specifically, the OFDM symbol count specification unit 24 is configured to specify the number of OFDM symbols used, for transmitting the signal for PDCHH and the signal for PDSCH in each subframe of each radio frame, so that this number becomes the same.

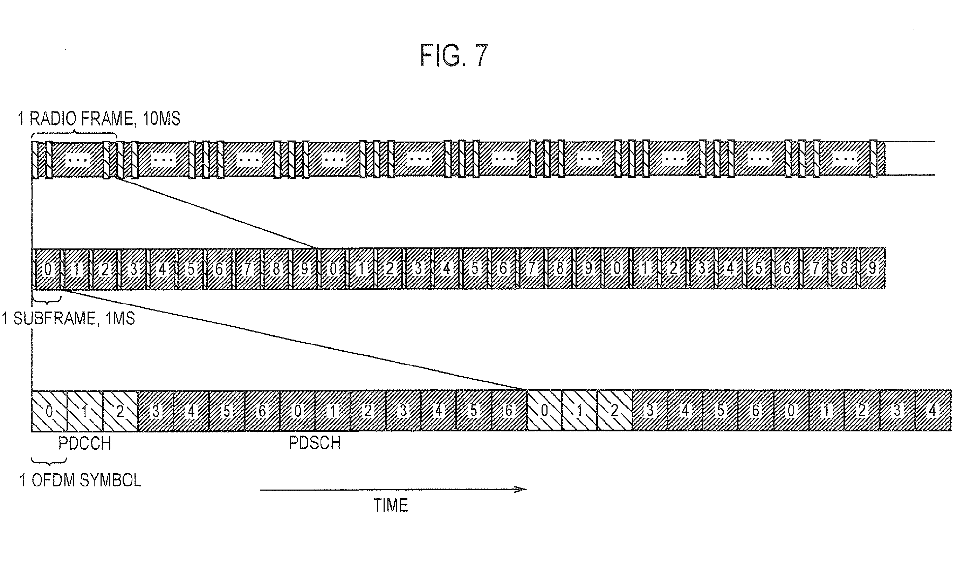

As shown in Fig. 7, in the LTE scheme, one subframe is configured by, for example, 14 OFDM symbols. Furthermore, the signal for PDCCH and the signal for PDSCH are configured to be transmitted in the same subframe. Note that a variable control may be performed for the number of OFDM symbols used for transmitting the signal for PDCCH and the signal for PDSCH, or these symbols may have a fixed value.

Specifically, the number of OFDM symbols of the signal for PDCCH can be taken as 1, 2, and 3, and in such a case, the number of OFDM symbols of the signal for PDSCH becomes 13, 12, and 11, respectively.

In the example of Fig. 7, the OFDM symbol count specification unit 24 is configured, to specify "3" as the number of OFDM symbols used for transmitting the signal for PDCCH, and to specify "11" as the number of OFDM symbols used for transmitting the signal for PDSCH, for the cell simulation units 1 through 3.

The cell simulation units 1 through 3 are configured to generate the downlink signal for a cell 1 through downlink signal for a cell 3, including the signal for PDCCH and the signal for PDSCH based on the timing adjustment information received from the timing adjustment unit 23 and the number of OFDM symbols received from the OFDM symbol count specification unit 24.

Specifically, the cell simulation units 1 through 3 are configured to adjust the lead position of the subframes in the radio frames configured to transmit the downlink signal for a cell 1 through downlink signal for a cell 3 based on the timing adjustment information received from the timing adjustment unit 23, and to map the signal for PDCCH and the signal for PDSCH in each subframe of each radio frame based on the number of OFDM symbols received from the OFDM symbol count specification unit 24.

The downlink signal output unit 22 is configured to synthesize a downlink signal for a cell 1 through downlink signal for a cell 3 transmitted by the cell simulation units 1 through 3, and then to transmit this signal to the mobile station UE as a simulation signal.

According to the function 2, because the transmission timing of the signal for PDCCH for a cell 1 and the transmission timing of the signal for PDSCH for cells 2 and 3 are shifted, mutual interference can be avoided.

### <Function 3>

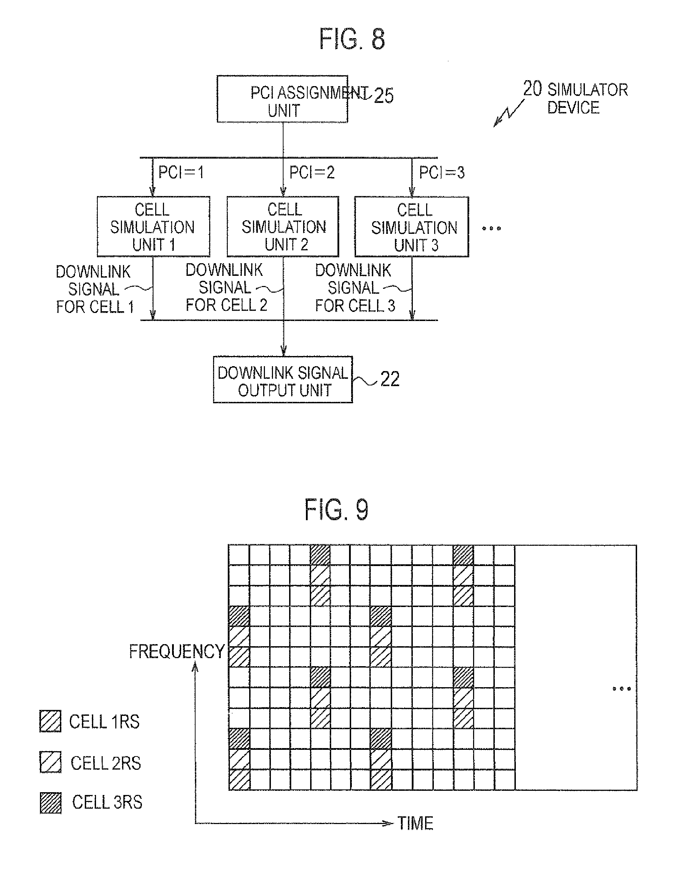

As shown in Fig. 8, the function unit 3 is configured by PCI (Physical Cell ID) assignment unit 25, cell simulation units 1 through 3, and a downlink signal output unit 22.

The PCI assignment unit 25 is configured to assign PCI to each cell.

The cell simulation units 1 through 3 are configured to generate RS (Reference Signal) for each cell, as the downlink signal for each cell.

The downlink output unit 22 is configured to transmit the RS for each cell (downlink signal for each cell) by a frequency direction resource determined by the PCI assigned to each cell.

Here, as shown in Fig. 9, the PCI assignment unit 25 is configured to assign PCI to each cell so that the frequency direction resource used for transmitting the RS for each cell does not overlap.

For example, a serial number (1 through 6) is assigned to each cell simulation unit, and the PCI assignment unit 25 is configured to assign the number (which is serial number - 1) as the PCI to a cell corresponding to each cell simulation unit.

According to the function 3, because the frequency direction resource used for transmitting the RS for each cell does not overlap, interference between the RS for each cell can be prevented.

### <Function 4>

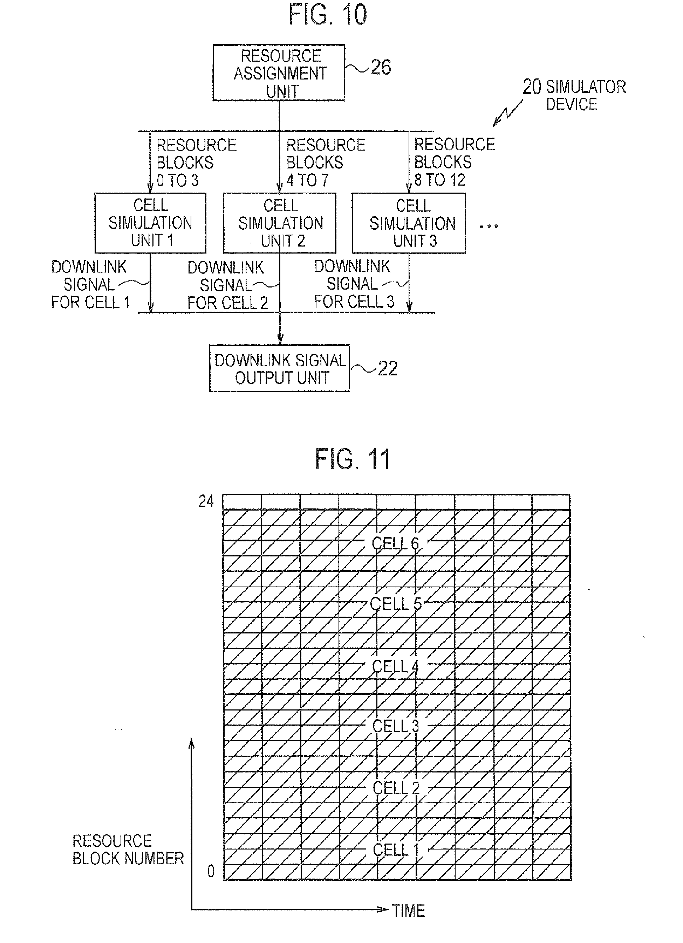

As shown in Fig. 10, the function unit 4 is configured by a resource assignment unit 26, cell simulation units 1 through 3, and a downlink signal output unit 22.

The resource assignment unit 26 is configured to assign resource blocks (frequency direction resource) configured to transmit a downlink signal for each cell.

Specifically, as shown in Fig. 11, the resource assignment unit 26 is configured to divide resource blocks (frequency direction resources), that can be used to transmit a downlink signal for each cell, into a plurality of groups in the frequency direction, and to assign one of these divided plurality of groups as resource blocks to be used for transmitting the downlink signal for each cell.

For example, the resource assignment unit 26 is configured to set, a group assigned as resource blocks (the first resource blocks) used for transmitting a downlink signal for a cell 1, and a group assigned as resource blocks (the second resource blocks) used for transmitting a downlink signal for a cell 2, as separate groups.

As shown in the example in Fig. 11, when the bandwidth of a frequency resource that can be used for transmitting a downlink signal for each cell is "5 MHz", 25 resource blocks are included in the said bandwidth, and therefore, when the simulator device 20 is configured to simulate an operation of six cells, the resource assignment unit 26 is configured to assign a group including four resource blocks, as resource blocks used for transmitting a downlink signal for each cell.

In such a case, for example, a serial number (1 to 6) is assigned to each cell simulation unit, and the resource assignment unit 26 is configured to assign, a group including four resource blocks with resource blocks having resource blocks number as "4 x (serial number - 1)" in the lead, as the resource blocks used for transmitting a downlink signal for the cells corresponding to each cell simulation unit.

Note that the resource assignment unit 26 may be configured to assign discontinuous resource blocks, or to assign resource blocks of different sizes as the resource blocks used for transmitting the downlink signal for cells.

The downlink signal output unit 22 is configured to transmit a downlink signal for each cell using resource blocks assigned by the resource assignment unit 26.

According to the function 4, because the resource blocks used for transmitting a downlink signal for each cell do not overlap in the frequency direction, interference between the downlink signal for each cell can be prevented.

Note that the above-mentioned downlink signal for each cell may include a signal for a downlink shared channel (DL-SCH), a signal for a dynamic broadcast channel (D-BCH), a signal for SIB (System Information Block), SI (System information), a paging channel, a random access response signal (RA response), and a signal for MBMS.

### <Function 5>

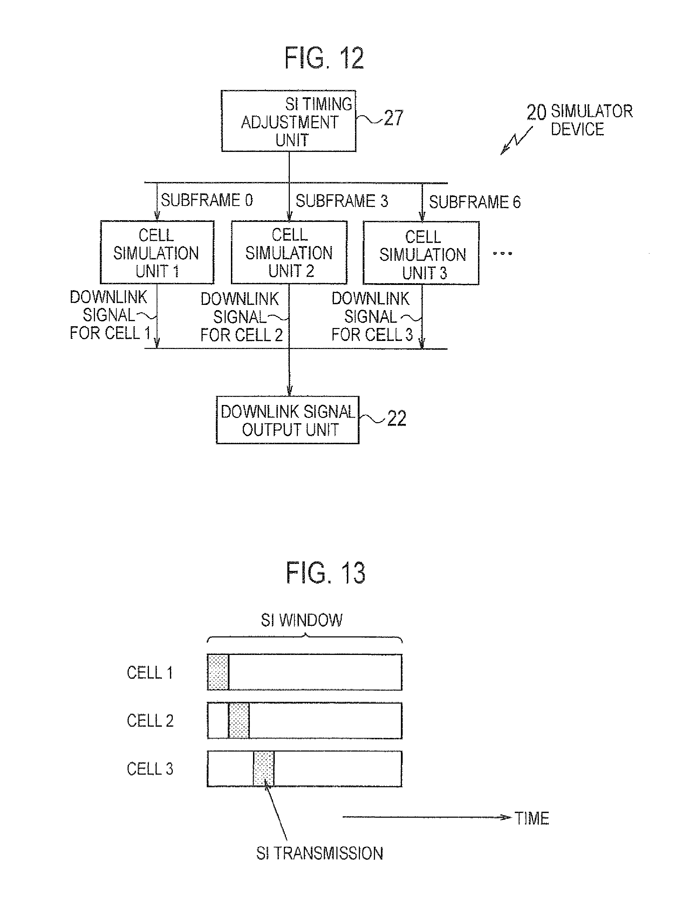

As shown in Fig. 12, the function unit 5 is configured by an SI timing adjustment unit 27, cell simulation units 1 through 3, and a downlink signal output unit 22.

The downlink signal output unit 22 is configured to transmit the SI (broadcast information) for each cell to the mobile station UE, as a simulation signal, within the predetermined time period referred to as the SI (System Information) window for each cell.

For example, the downlink signal output unit 22 is configured to transmit the SI (broadcast information) for a cell 1 within the first S1 window (the first predetermined time period), to transmit the SI for a cell 2 within the second S1 window (the second predetermined time period), and to transmit the SI for a cell 3 within the third SI window (the third predetermined time period), to the mobile station UE, as a simulation signal.

The SI timing adjustment unit 27 is configured to adjust the transmission timing (for example, subframe) of the SI for each cell.

Specifically, as shown in Fig. 13, the SI timing adjustment unit 27 is configured to adjust the transmission timing of the SI for each cell so that the transmission timing of the SI for each cell does not overlap. In other words, the transmission timing of the SI for each cell is of a different timing.

Note that the start timing of the SI window for each cell may be matching, or different.

For example, when a serial number (1 to 6) is assigned to each cell simulation unit, and the start timing of the SI window for each cell is matching, the SI timing adjustment unit 27 is configured to transmit the SI for each cell by a subframe numbered "3 x (serial number - 1)" in the SI window for each cell.

The cell simulation units 1 through 3 are configured to generate a downlink signal for each cell, so that the SI for each cell is transmitted by a subframe specified by the SI timing adjustment unit 27.

According to the function 5, the SI for each cell can be transmitted at a different transmission timing, and therefore as a result, interference between the SI for each cell can be prevented.

### <Function 6>

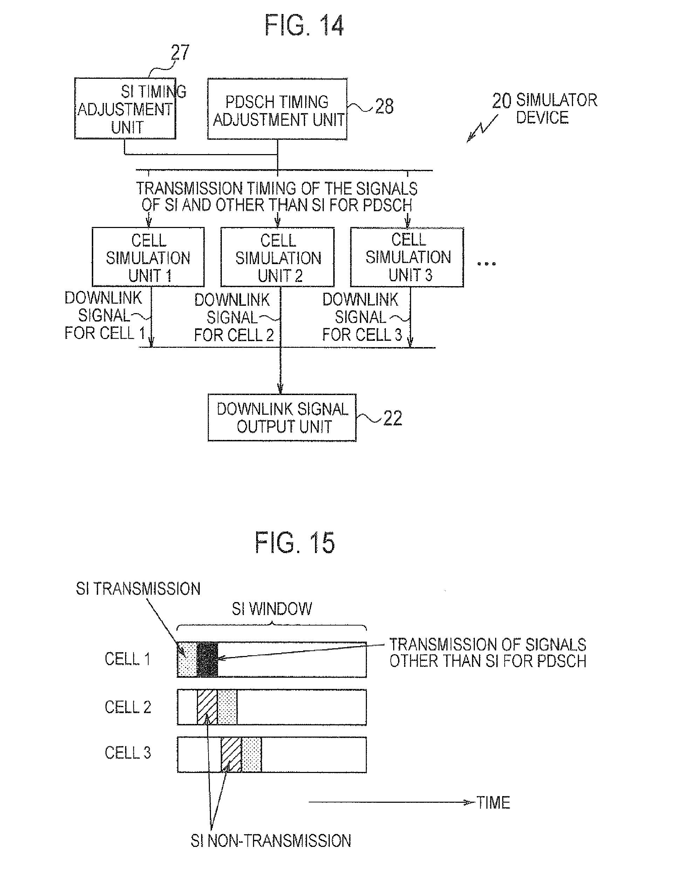

As shown in Fig. 14, the function unit 6 is configured by an SI timing adjustment unit 27, a PDSCH timing adjustment unit 28, cell simulation units 1 through 3, and a downlink signal output unit 22.

The downlink signal output unit 22 is configured to transmit the SI for each cell and the signal (downlink data signal) for PDSCH other than the SI, to the mobile station UE, as a simulation signal. Here, the downlink signal output unit 22 is configured to transmit the SI for each cell via PDSCH in the SI window for each cell.

The PDSCH timing adjustment unit 28 is configured to adjust the transmission timing (for example, subframe) of the above-mentioned signal for PDSCH other than SI.

Specifically, as shown in Fig. 15, the PDSCH timing adjustment unit 28 is configured so that the signal for PDSCH for a cell 1 and the signal for PDSCH for a cell 2 are not transmitted at the transmission timing of SI for a cell 1.

For example, the SI timing adjustment unit 27 may adjust the transmission timing of the SI for a cell 1 to be delayed by one subframe, in cases where the transmission timing of the SI for a cell 1, and the transmission timing of the signals other than SI for PDSCH for a cell 1 (or cell 2), overlap.

Alternatively, the SI timing adjustment unit 27 may adjust the transmission timing of the signals other than the SI for PDSCH for a cell 1 (or cell 2) to be delayed by one subframe, in cases where the transmission timing of the SI for a cell 1 and the transmission timing of the signals other than SI for PDSCH for a cell 1 (or cell 2), overlap.

Alternatively, the SI timing adjustment unit 27 may adjust the transmission timing of the SI for a cell 1 to be delayed to the SI window for the next cell 1, in cases where the transmission timing of the SI for a cell 1 and the transmission timing of the signals other than SI for PDSCH for a cell 1 (or cell 2), overlap.

Alternatively, the SI timing adjustment unit 27 may perform a process so the SI for the corresponding cell 1 is not transmitted, in case where the transmission timing of the 81 for a cell 1 and the transmission timing of the signals other than SI for PDSCH for a cell 1 (or cell 2), overlap.

The cell simulation units 1 through 3 are configured to generate a downlink signal for each cell so as to transmit the SI for each cell by a subframe specified by the SI timing adjustment unit 27, and to transmit the signals other than SI for PDSCH for each cell by a subframe specified by the PDSCH timing adjustment unit 28.

### <Function 7>

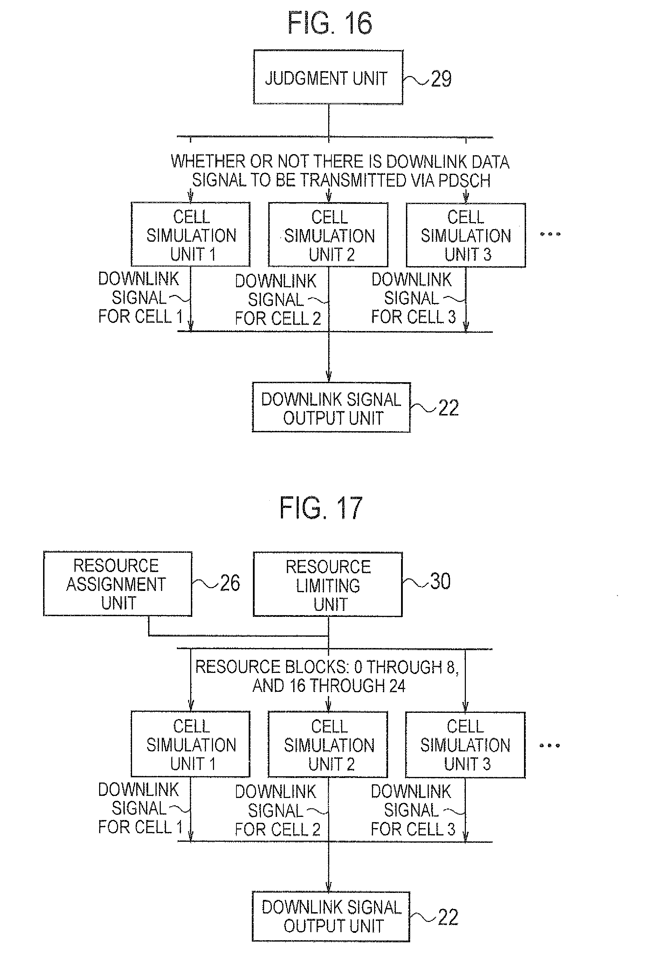

As shown in Fig. 16, the function unit 7 is configured by a judgment unit 29, cell simulation units 1 through 3, and a downlink signal output unit 22.

The judgment unit 29 is configured to determine whether or not a downlink data signal for each cell, which must be transmitted, specifically, a signal for PDSCH for each cell which must be transmitted, exists.

The cell simulation units 1 through 3 are configured to generate, respectively, the signal for PDSCH for a cell 1 through the signal for PDSCH for a cell 3 when it is determined that the downlink data signal to be transmitted does exist, and to not generate the signal for PDSCH for a cell 1 through the signal for PDSCH for a cell 3 when it is determined that the downlink data signal to be transmitted does not exist.

As a result, the downlink signal output unit 22 transmits a PDSCH signal, only when a downlink data signal for a specific cell which must be transmitted exists, and stops the transmission of a PDSCH signal when a downlink data signal for a specific cell which must be transmitted does not exist.

According to the function 7, because the configuration is in such way that a signal for PDSCH is not transmitted, when a downlink data signal for a specific cell which must be transmitted does not exist, the interference between the PDSCH signals for different cells can be prevented as much as possible.

### <Function 8>

As shown in Fig. 17, the function unit 8 is configured by a resource assignment unit 26, a resource limiting unit 30, cell simulation units 1 through 3, and a downlink signal output unit 22.

The resource limiting unit 30 is configured to limit the frequency direction resources, which can be assigned as frequency direction resources configured to transmit a downlink signal for each cell.

The resource assignment unit 26 is configured to assign a frequency direction resource configured to transmit a downlink signal for each cell, under consideration of the limiting status of the resource limiting unit 30.

The downlink signal output unit 22 is configured to transmit a downlink signal for each cell by a frequency direction resource assigned by the resource assignment unit 26, to the mobile station UE, as a simulation signal.

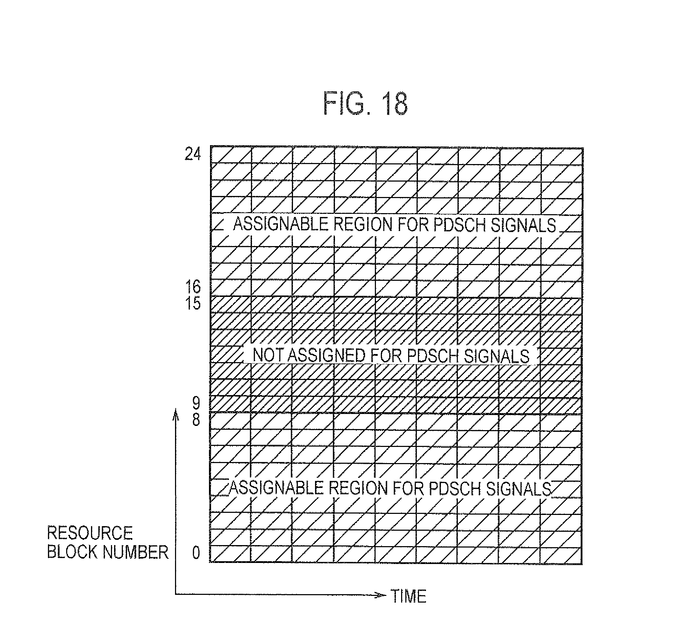

Here, as shown in Fig. 18, the resource assignment unit 26 is configured in such way that, out of the frequency direction resources that can be used for transmitting a downlink signal for each cell, a predetermined number of frequency direction resources, centered around the frequency direction resource in the center, are not assigned as frequency direction resources to be used for transmitting a signal (downlink data signal) for PDSCH for each cell.

Note that the frequency direction resources in the center are used to transmit signals for P-SS, S-SS, and P-BCH (Physical BCH).

Thus, in other words, the resource assignment unit 26 is configured in a manner such that, out of the frequency direction resources that can be used for transmitting a downlink signal for each cell, the frequency direction resources that transmit a P-SS, S-SS, and broadcast information, are not assigned as frequency direction resources to be used for transmitting a signal (downlink data signal) for PDSCH for each cell.

Specifically, if an even number of resource blocks are included within the bandwidth of the frequency direction resources that can be used for transmitting a downlink signal for each cell, the resource assignment unit 26 may be configured such that the six resource blocks centered, around the frequency direction resource in the center, are not assigned as resource blocks to be used for transmitting a signal for PDSCH for each cell.

On the other hand, if an odd number of resource blocks are included within the bandwidth of the frequency direction resources that can be used for transmitting a downlink signal for each cell, the resource assignment unit 26 may be configured such that the seven resource blocks centered, around the frequency direction resource in the center, are not assigned as resource blocks to be used for transmitting a signal for PDSCH for each cell.

For example, when the bandwidth of the frequency direction resources that can be used for transmitting a downlink signal for each cell is "5 MHz", 25 resource blocks are included in the said bandwidth. Therefore, the resource assignment unit 26 may be configured such that the seven resource blocks, centered on the frequency direction resource in the center, are not assigned as resource blocks to be used for transmitting a signal for PDSCH for each cell.

According to the function 8, out of the frequency direction resources that can be used for transmitting a downlink signal for each cell, a predetermined number of frequency direction resources centered on the frequency direction resource in the center, that are used to transmit a P-SS and S-SS, are not assigned as frequency direction resources used for transmitting a signal for PDSCH for each cell. Therefore, interference between the signal for PDSCH, and P-SS and/or S-SS, can be prevented.

Note that in the above explanation, an example of applying the functions 1 through 8 in three cells was shown. However, the functions 1 through 8 may also be applied to two cells, or four or more cells. In such cases, the above-mentioned functions 1 through 8 are applied in a manner such that no interference occurs between the two cells, or among the four or more cells.

### (Modification)

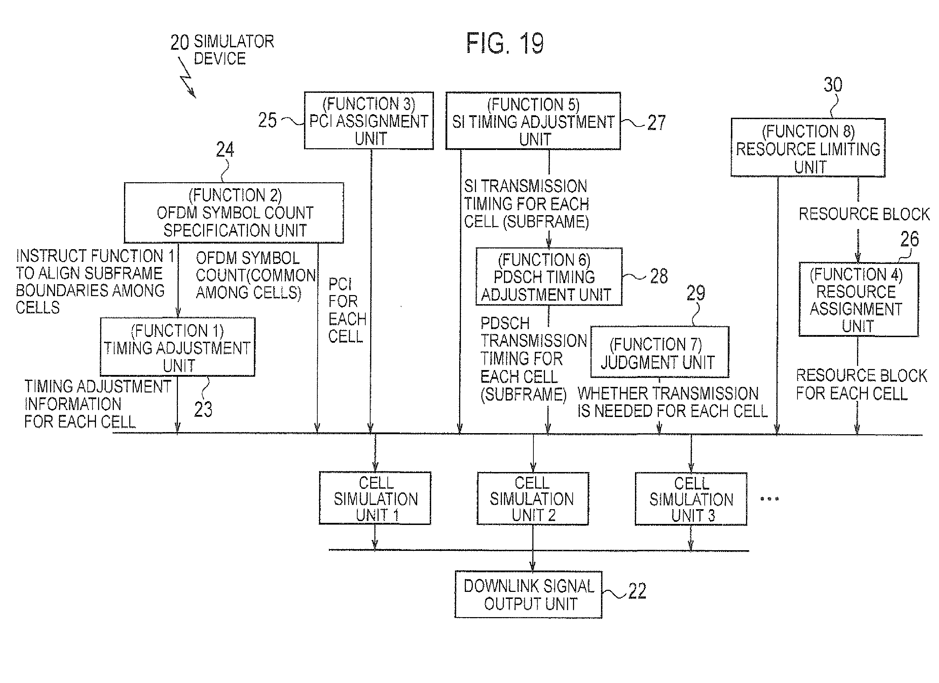

Fig. 19 shows a modification of the simulator device 20 according to the first embodiment of the present invention.

As shown in Fig. 19, the simulator device 20 includes all of the functions 1 through 8, and is configured to individually turn each function "ON" or "OFF". The operation of each of the functions 1 through 8 is basically the same as functions 1 through 8 in the simulator device 20 according to the above-mentioned first embodiment.

Here, the configuration is such that when the function 6 is "ON", the output of function 5 is transmitted to the function 6, and when the function 6 is "OFF", the output of the function 5 is transmitted to each cell simulation unit.

Similarly, the configuration is such that when the function 4 is "ON", the output of the function 8 is transmitted to the function 4, and when the function 4 is "OFF", the output of the function 8 is transmitted to each cell simulation unit.

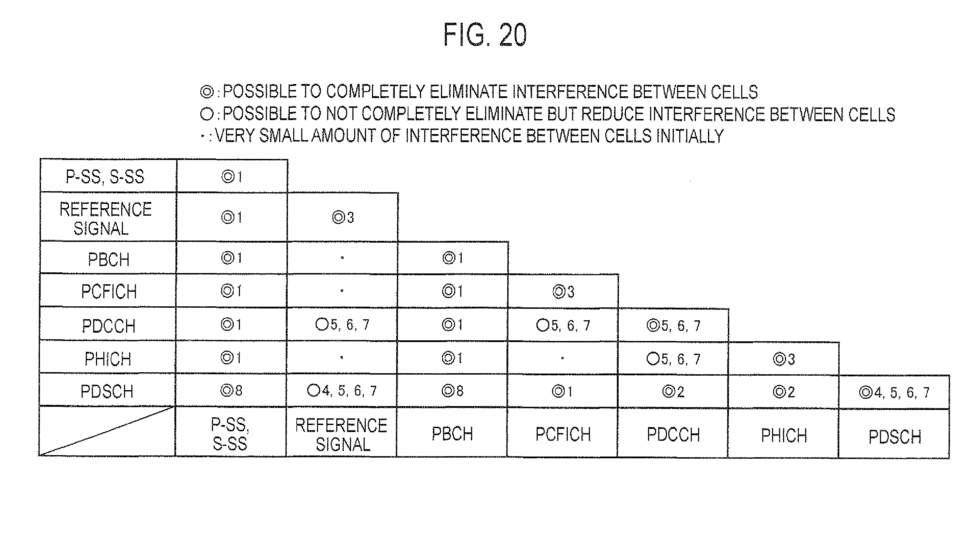

Note that the relationship, between the combination of a physical channel or physical signal and the functions that can be applied to the combination, is explained with reference to Fig. 20.

As shown in Fig. 20, when the downlink signal for a cell 1 is P-SS or S-SS, and the downlink signal for a cell 2 is P-SS or S-SS, the interference between the downlink signal for a cell 1 and the downlink signal for a cell 2 can be completely eliminated by turning the function 1 "ON".

Furthermore, when the downlink signal for a cell 1 is P-SS or S-SS, and the downlink signal for a cell 2 is RS, the interference between the downlink signal for a cell 1 and the downlink signal for a cell 2 can be completely eliminated by turning the function 1 "ON".

Furthermore, when the downlink signal for a cell 1 is P-SS or S-SS, and the downlink signal for a cell 2 is a signal for PBCH, the interference between the downlink signal for a cell 1 and the downlink signal for a cell 2 can be completely eliminated by turning the function 1 "ON".

Furthermore, when the downlink signal for a cell 1 is P-SS or S-SS, and the downlink signal for a cell 2 is a signal for PCFICH (Physical Control Format Indicator Channel), the interference between the downlink signal for a cell 1 and the downlink signal for a cell 2 can be completely eliminated by turning the function 1 "ON".

Furthermore, when the downlink signal for a cell 1 is P-SS or S-SS, and the downlink signal for a cell 2 is a signal for PDCCH, the interference between the downlink signal for a cell 1 and the downlink signal for a cell 2 can be completely eliminated by turning the function 1 "ON".

Furthermore, when the downlink signal for a cell 1 is P-SS or S-SS, and the downlink signal for a cell 2 is a signal for PHICH (Physical HARQ Indicator Channel), the interference between the downlink signal for a cell 1 and the downlink signal for a cell 2 can be completely eliminated by turning the function 1 "ON".

When the downlink signal for a cell 1 is P-SS or S-SS, and the downlink signal for a cell 2 is a signal for PDSCH, the interference between the downlink signal for a cell 8 and the downlink signal for a cell 2 can be completely eliminated by turning the function 1 "ON".

Even when the downlink signal for a cell 1 is RS, and the downlink signal for a cell 2 is RS, the interference between the downlink signal for a cell 3 and the downlink signal for a cell 2 can be completely eliminated by turning the function 3 "ON".

Furthermore, even when the downlink signal for a cell 1 is RS, and the downlink signal for a cell 2 is a signal for PDCCH, the interference between the downlink signal for a cell 5 and the downlink signal for a cell 2 can be completely eliminated by turning the functions 5, 6, and 7 "ON".

Furthermore, even when the downlink signal for a cell 1 is RS, and the downlink signal for a cell 2 is a signal for PDSCH, the interference between the downlink signal for a cell 5 and the downlink signal for a cell 2 can be completely eliminated by turning the functions 4, 5, 6, and 7 "ON".

When the downlink signal for a cell 1 is a signal for PBCH, and the downlink signal for a cell 2 is a signal for PBCH, the interference between the downlink signal for a cell 1 and the downlink signal for a cell 2 can be completely eliminated by turning the function 1 "ON".

Furthermore, when the downlink signal for a cell 1 is a signal for PBCH, and the downlink signal for a cell 2 is a signal for PCFICH, the interference between the downlink signal for a cell 1 and the downlink signal for a cell 2 can be completely eliminated by turning the function 1 "ON".

Furthermore, when the downlink signal for a cell 1 is a signal for PBCH, and the downlink signal for a cell 2 is a signal for PDCCH, the interference between the downlink signal for a cell 1 and the downlink signal for a cell 2 can be completely eliminated by turning the function 1 "ON".

Furthermore, when the downlink signal for a cell 1 is a signal for PBCH, and the downlink signal for a cell 2 is a signal for PHICH, the interference between the downlink signal for a cell 1 and the downlink signal for a cell 2 can be completely eliminated by turning the function 1 "ON".

Furthermore, when the downlink signal for a cell 1 is a signal for PBCH, and the downlink signal for a cell 2 is a signal for PDSCH, the interference between the downlink signal for a cell 1 and the downlink signal for a cell 2 can be completely eliminated by turning the function 8 "ON".

When the downlink signal for a cell 1 is a signal for PCFICH, and the downlink signal for a cell 2 is a signal for PCFICH, the interference between the downlink signal for a cell 1 and the downlink signal for a cell 2 can be completely eliminated by turning the function 3 "ON".

Furthermore, even when the downlink signal for a cell 1 is PCFICH, and the downlink signal for a cell 2 is a signal for PDCCH, the interference between the downlink signal for a cell 1 and the downlink signal for a cell 2 can be completely eliminated by turning the functions 5, 6, and 7 "ON".

Furthermore, when the downlink signal for a cell 1 is a signal for PCFICH, and the downlink signal for a cell 2 is a signal for PDSCH, the interference between the downlink signal for a cell 1 and the downlink signal for a cell 2 can be completely eliminated by turning the function 1 "ON".

When the downlink signal for a cell 1 is a signal for PDCCH, and the downlink signal for a cell 2 is a signal for PDCCH, the interference between the downlink signal for a cell 1 and the downlink signal for a cell 2 can be completely eliminated by turning the functions 5, 6, and 7 "ON".

Furthermore, even when the downlink signal for a cell 1 is a signal for PDCCH, and the downlink signal for a cell 2 is a signal for PHICH, the interference between the downlink signal for a cell 1 and the downlink signal for a cell 2 can be completely eliminated by turning the functions 5, 6, and 7 "ON".

Furthermore, when the downlink signal for a cell 1 is a signal for PDCCH, and the downlink signal for a cell 2 is a signal for PDSCH, the interference between the downlink signal for a cell 1 and the downlink signal for a cell 2 can be completely eliminated by turning the function 2 "ON".

When the downlink signal for a cell 1 is a signal for PHICH, and the downlink signal for a cell 2 is a signal for PHICH, the interference between the downlink signal for a cell 1 and the downlink signal for a cell 2 can be completely eliminated by turning the function 3 "ON".

Furthermore, when the downlink signal for a cell 1 is a signal for PHICH, and the downlink signal for a cell 2 is a signal for PDSCH, the interference between the downlink signal for a cell 1 and the downlink signal for a cell 2 can be completely eliminated by turning the function 2 "ON".

When the downlink signal for a cell 1 is a signal for PDSCH, and the downlink signal for a cell 2 is a signal for PDSCH, the interference between the downlink signal for a cell 1 and the downlink signal for a cell 2 can be completely eliminated by turning the functions 4, 5, 6, and 7 "ON".

The characteristics of the present embodiment as described above may be expressed as follows:

A gist of a first characteristic of the present embodiment is a simulator device 20, including a downlink signal output unit 22 configured to transmit a downlink signal for a cell 1 (first cell) and transmit a downlink signal for a cell 2 (second cell), in the form of a simulation signal, to a mobile station UE, in which the downlink signal output unit 22 is configured to shift the lead position of a radio frame from which to transmit the downlink signal for a cell 1, and the lead position of a radio frame from which to transmit the downlink signal for a cell 2.

A gist of a second characteristic of the present embodiment is a simulator device 20, including a downlink signal output unit 22, configured to transmit a downlink signal for a cell 1 including a signal for PDCCH (downlink control signal) and a signal for PDSCH (downlink data signal), and to transmit a downlink signal for a cell 2 including the signal for PDCCH and the signal for PDSCH, in the form of a simulation signal, to a mobile station UE, in which the downlink signal output unit 22 is configured to align the boundary of a subframe in a first radio frame from which to transmit the downlink signal for a cell 1, and the boundary of a subframe in a second radio frame from which to transmit the downlink signal for a cell 2, and the downlink signal output unit 22 is configured to make the number of OFDM symbols used for transmitting the signal for PDCCH and the signal for PDSCH in each subframe within the first radio frame, equal to the number of OFDM symbols used for transmitting the signal for PDCCH and the signal for PDSCH in each subframe within the second radio frame.

A gist of a third characteristic of the present embodiment is a simulator device 20, including a physical cell ID assignment unit 25 configured to assign a physical cell ID to a first cell and a second cell and a downlink signal output unit 22 configured to transmit the downlink signal for a first cell by a first frequency direction resource determined by a physical cell ID imparted to the first cell, and to transmit the downlink signal for a second cell by a second frequency direction resource determined by a physical cell ID imparted to the second cell, to a mobile station UE, in the form of a simulation signal, in which the physical cell ID assignment unit 25 is configured to assign the physical cell ID to the first cell and the second cell so that the first frequency direction resource and the second frequency direction resource do not overlap.

A gist of a fourth characteristic of the present embodiment is a simulator device 20, including a resource assignment unit 26 configured to assign a first frequency direction resource by which to transmit a downlink signal for a first cell, and a second frequency direction resource by which to transmit a downlink signal for a second cell and a downlink signal output unit 22 configured to transmit the downlink signal for a first cell by the first frequency direction resource, and the downlink signal for a second cell by the second frequency direction resource, to a mobile station UE, in the form of a simulation signal, in which the resource assignment unit 26 is configured to divide the frequency direction resources that can be used for transmitting the downlink signal for a first cell and the downlink signal for a second cell, in the frequency directions into a plurality of groups, and to assign one of a plurality of divided groups, as the first frequency direction resource and the second frequency direction resource, and the resource assignment unit 26 is configured such that the group assigned as the first frequency direction resource is differed from the group assigned as the second frequency direction resource.

A gist of a fifth characteristic of the present embodiment is a simulator device 20, including a downlink signal output unit 22 configured to transmit at least one broadcast information for a first cell or a synchronization signal within a first predetermined period, and to transmit at least one broadcast information for a second cell or a synchronization signal within a second predetermined period, in the form of a simulation signal, to a mobile station UE, in which the downlink signal output unit 22 is configured such that the transmission timing of the at least one broadcast information for a first cell or the synchronization signal, is differed from the transmission timing of the at least one broadcast information for a second cell or the synchronization signal.

A gist of a sixth characteristic of the present embodiment is a simulator device 20, including a downlink signal output unit 22 configured to transmit broadcast information for a first cell within a first predetermined period, and to transmit a downlink signal for a second cell, in the form of a simulation signal, to a mobile station UE, in which the downlink signal output unit 22 is configured to not transmit the downlink signal for a second cell at the transmission timing of the broadcast information for a first cell.

A gist of a seventh characteristic of the present embodiment is a simulator device 20, including a downlink signal output unit 22 configured to transmit a downlink data signal for a specific cell via a physical downlink data channel, in the form of a simulation signal, to a mobile station, in which the downlink signal output unit 22 is configured, to stop the transmission of the downlink signal via the physical downlink data channel, when there is no downlink data signal for a specific cell that should be transmitted.

A gist of an eighth characteristic of the present embodiment is a simulator device 20, including a resource assignment unit 26 configured to assign, a first frequency direction resource by which to transmit a downlink data signal for a first cell, and a second frequency direction resource by which to transmit a downlink data signal for a second cell and a downlink signal output unit 22 configured to transmit, the downlink data signal for a first cell by the first frequency direction resource, and the downlink data signal for a second cell by the second frequency direction resource, in the form of a simulation signal, to a mobile station UE, in which the resource assignment unit 26 is configured to not assign a predetermined number of frequency direction resources centered on the frequency direction resource in the center, out of the frequency direction resources that can be used for transmitting the downlink signal for a first cell and the downlink signal for a second cell, as the first frequency direction resource and the second frequency direction resource.

A gist of a ninth characteristic of the present embodiment is a simulation method, including a step of transmitting a downlink signal for a first cell, and transmitting a downlink signal for a second cell, in the form of a simulation signal, to a mobile station UE, in which in this preceding step, the lead position of a radio frame from which to transmit the downlink signal for a first cell is shifted from the lead position of a radio frame from which to transmit the downlink signal for a second cell.

A gist of a tenth characteristic of the present embodiment is a simulation method, including a step of transmitting a downlink signal for a first cell including the signal for PDCCH (a downlink control signal) and the signal for PDSCH (a downlink data signal), and transmitting a downlink signal for a second cell including the signal for PDCCH and the signal for PDSCH, in the form of a simulation signal, to a mobile station UE, in which in this preceding step, the boundary of a subframe in a first radio frame from which to transmit the downlink signal for a first cell, is aligned to the boundary of a subframe in a second radio frame from which to transmit the downlink signal for a second cell, and in this preceding step, the number of OFDM symbols used for transmitting the signal for PDCCH and the signal for PDSCH in each subframe within the first radio frame, is made equal to the number of OFDM symbols used for transmitting the downlink control signal and the downlink data signal in each subframe within the second radio frame.

A gist of an eleventh characteristic of the present embodiment is a simulation method, including a step A in which a physical cell ID is assigned to a first cell and a second cell and a step B in which the downlink signal for a first cell is transmitted by a first frequency direction resource determined by a physical cell ID imparted to the first cell, and the downlink signal for a second cell is transmitted by a second frequency direction resource determined by a physical cell ID imparted to the second cell, in the form of a simulation signal, to a mobile station UE, in which in this step A, the physical cell ID is assigned to the first cell and the second cell so that the first frequency direction resource and the second frequency direction resource do not overlap.

A gist of a twelfth characteristic of the present embodiment is a simulation method, including a step A of assigning a first frequency direction resource by which to transmit a downlink signal for a first cell, and a second frequency direction resource by which to transmit a downlink signal for a second cell and a step B of transmitting the downlink signal for a first cell by the first frequency direction resource, and transmitting the downlink signal for a second cell by the second frequency direction resource, in the form of a simulation signal, to a mobile station UE, in which in the step A, frequency direction resources that can be used for transmitting the downlink signal for a first cell and the downlink signal for a second cell, is divided in the frequency directions into a plurality of groups, and one of a plurality of divided groups is each assigned as the first frequency direction resource and the second frequency direction resource, and in the step A, the group assigned as the first frequency direction resource is differed from the group assigned as the second frequency direction resource.

A gist of a thirteenth characteristic of the present embodiment is a simulation method, comprising a step of transmitting at least one broadcast information for a first cell or a synchronization signal within a first predetermined period, and transmitting at least one broadcast information for a second cell or a synchronization signal within a second predetermined period, in the form of a simulation signal, to a mobile station UE, in which in this preceding step, the transmission timing of the at least one broadcast information for a first cell or the synchronization signal is differed from the transmission timing of the at least one broadcast information for a second cell or the synchronization signal.

A gist of a fourteenth characteristic of the present embodiment is a simulation method, comprising a step of transmitting the broadcast information for a first cell within a first predetermined period, and transmitting a downlink signal for a second cell, in the form of a simulation signal, to a mobile station UE, in which in this preceding step, the downlink signal for a second cell is not transmitted at the transmission timing of the broadcast information for a first cell.

A gist of a fifteenth characteristic of the present embodiment is a simulation method, comprising a step of transmitting the signal for PDCCH for a specific cell via a physical the signal for PDSCH, in the form of a simulation signal, to a mobile station UE, in which in this preceding step, transmission of the downlink signal via the physical downlink data channel is stopped when there is no downlink data signal for a specific cell that should be transmitted.

A gist of a sixteenth characteristic of the present embodiment is a simulation method, including a step A of assigning a first frequency direction resource by which to transmit a downlink data signal for a first cell, and a second frequency direction resource by which to transmit a downlink data signal for a second cell and a step B of transmitting the downlink data signal for a first cell by the first frequency direction resource, and the downlink data signal for a second cell by the second frequency direction resource, in the form of a simulation signal, to a mobile station UE, in which in the step A, a predetermined number of frequency direction resources centered on the frequency direction resource in the center are not assigned, out of the frequency direction resources that can be used, for transmitting the downlink signal for a first cell and the downlink signal for a second cell, as the first frequency direction resource and the second frequency direction resource.

It is noted that the operation of the above-described mobile station UE or the simulator device 20 may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE or the simulator device 20. Further, such a storage medium or a processor may be arranged, as a discrete component, in the mobile station UE or the simulator device 20.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A simulator device, comprising a downlink signal output unit configured to transmit a downlink signal for a first cell and transmit a downlink signal for a second cell, in the form of a simulation signal, to a mobile station, wherein
the downlink signal output unit is configured to shift the lead position of a radio frame from which to transmit the downlink signal for a first cell, and the lead position of a radio frame from which to transmit the downlink signal for a second cell.

2. A simulator device, comprising a downlink signal output unit, configured to transmit a downlink signal for a first cell including a downlink control signal and a downlink data signal, and to transmit a downlink signal for a second cell including a downlink control signal and a downlink data signal, in the form of a simulation signal, to a mobile station, wherein
the downlink signal output unit is configured to align the boundary of a subframe in a first radio frame from which to transmit the downlink signal for a first cell, and the boundary of a subframe in a second radio frame from which to transmit the downlink signal for a second cell, and
the downlink signal output unit is configured to make the number of OFDM symbols used for transmitting the downlink control signal and the downlink data signal in each subframe within the first radio frame, equal to the number of OFDM symbols used for transmitting the downlink control signal and the downlink data signal in each subframe within the second radio frame.

3. A simulator device, comprising:
a physical cell ID assignment unit configured to assign a physical cell ID to a first cell and a second cell; and
a downlink signal output unit configured to transmit the downlink signal for a first cell by a first frequency direction resource determined by a physical cell ID imparted to the first cell, and to transmit the downlink signal for a second cell by a second frequency direction resource determined by a physical cell ID imparted to the second cell, to a mobile station, in the form of a simulation signal, wherein
the physical cell ID assignment unit is configured to assign the physical cell ID to the first cell and the second cell so that the first frequency direction resource and the second frequency direction resource do not overlap.

4. A simulator device, comprising:
a resource assignment unit configured to assign a first frequency direction resource by which to transmit a downlink signal for a first cell, and a second frequency direction resource by which to transmit a downlink signal for a second cell; and
a downlink signal output unit configured to transmit the downlink signal for a first cell by the first frequency direction resource, and the downlink signal for a second cell by the second frequency direction resource, to a mobile station, in the form of a simulation signal, wherein
the resource assignment unit is configured to divide the frequency direction resources that can be used for transmitting the downlink signal for a first cell and the downlink signal for a second cell, in the frequency directions into a plurality of groups, and to assign one of a plurality of divided groups, as the first frequency direction resource and the second frequency direction resource, and
the resource assignment unit is configured such that the group assigned as the first frequency direction resource is differed from the group assigned as the second frequency direction resource.

5. A simulator device, comprising a downlink signal output unit configured to transmit at least one broadcast information for a first cell or a synchronization signal within a first predetermined period, and to transmit at least one broadcast information for a second cell or a synchronization signal within a second predetermined period, in the form of a simulation signal, to a mobile station, wherein
the downlink signal output unit is configured such that the transmission timing of the at least one broadcast information for a first cell or the synchronization signal, is differed from the transmission timing of the at least one broadcast information for a second cell or the synchronization signal.

6. A simulator device, comprising a downlink signal output unit configured to transmit broadcast information for a first cell within a first predetermined period, and to transmit a downlink signal for a second cell, in the form of a simulation signal, to a mobile station, wherein
the downlink signal output unit is configured to not transmit the downlink signal for a second cell at the transmission timing of the broadcast information for a first cell.

7. A simulator device, comprising a downlink signal output unit configured to transmit a downlink data signal for a specific cell via a physical downlink data channel, in the form of a simulation signal, to a mobile station, wherein
the downlink signal output unit is configured, to stop the transmission of the downlink signal via the physical downlink data channel, when there is no downlink data signal for a specific cell that should be transmitted.

8. A simulator device, comprising:
a resource assignment unit configured to assign, a first frequency direction resource by which to transmit a downlink data signal for a first cell, and a second frequency direction resource by which to transmit a downlink data signal for a second cell; and
a downlink signal output unit configured to transmit, the downlink data signal for a first cell by the first frequency direction resource, and the downlink data signal for a second cell by the second frequency direction resource, in the form of a simulation signal, to a mobile station, wherein
the resource assignment unit is configured to not assign a predetermined number of frequency direction resources centered on the frequency direction resource in the center, out of the frequency direction resources that can be used for transmitting the downlink signal for a first cell and the downlink signal for a second cell, as the first frequency direction resource and the second frequency direction resource.

9. A simulation method, comprising a step of transmitting a downlink signal for a first cell, and transmitting a downlink signal for a second cell, in the form of a simulation signal, to a mobile station, wherein
in this preceding step, the lead position of a radio frame from which to transmit the downlink signal for a first cell is shifted from the lead position of a radio frame from which to transmit the downlink signal for a second cell.

10. A simulation method, comprising a step of transmitting a downlink signal for a first cell including a downlink control signal and a downlink data signal, and transmitting a downlink signal for a second cell including a downlink control signal and a downlink data signal, in the form of a simulation signal, to a mobile station, wherein
in this preceding step, the boundary of a subframe in a first radio frame from which to transmit the downlink signal for a first cell, is aligned to the boundary of a subframe in a second radio frame from which to transmit the downlink signal for a second cell, and
in this preceding step, the number of OFDM symbols used for transmitting the downlink control signal and the downlink data signal in each subframe within the first radio frame, is made equal to the number of OFDM symbols used for transmitting the downlink control signal and the downlink data signal in each subframe within the second radio frame.

11. A simulation method, comprising:
a step A in which a physical cell ID is assigned to a first cell and a second cell; and
a step B in which the downlink signal for a first cell is transmitted by a first frequency direction resource determined by a physical cell ID imparted to the first cell, and the downlink signal for a second cell is transmitted by a second frequency direction resource determined by a physical cell ID imparted to the second cell, in the form of a simulation signal, to a mobile station, wherein
in this step A, the physical cell ID is assigned to the first cell and the second cell so that the first frequency direction resource and the second frequency direction resource do not overlap.

12. A simulation method, comprising:
a step A of assigning a first frequency direction resource by which to transmit a downlink signal for a first cell, and a second frequency direction resource by which to transmit a downlink signal for a second cell; and
a step B of transmitting the downlink signal for a first cell by the first frequency direction resource, and transmitting the downlink signal for a second cell by the second frequency direction resource, in the form of a simulation signal, to a mobile station, wherein
in the step A, frequency direction resources that can be used for transmitting the downlink signal for a first cell and the downlink signal for a second cell, is divided in the frequency directions into a plurality of groups, and one of a plurality of divided groups is each assigned as the first frequency direction resource and the second frequency direction resource, and
in the step A, the group assigned as the first frequency direction resource is differed from the group assigned as the second frequency direction resource.

13. A simulation method, comprising a step of transmitting at least one broadcast information for a first cell or a synchronization signal within a first predetermined period, and transmitting at least one broadcast information for a second cell or a synchronization signal within a second predetermined period, in the form of a simulation signal, to a mobile station, wherein
in this preceding step, the transmission timing of the at least one broadcast information for a first cell or the synchronization signal is differed from the transmission timing of the at least one broadcast information for a second cell or the synchronization signal.

14. A simulation method, comprising a step of transmitting the broadcast information for a first cell within a first predetermined period, and transmitting a downlink signal for a second cell, in the form of a simulation signal, to a mobile station, wherein
in this preceding step, the downlink signal for a second cell is not transmitted at the transmission timing of the broadcast information for a first cell.

15. A simulation method, comprising a step of transmitting a downlink data signal for a specific cell via a physical downlink data channel, in the form of a simulation signal, to a mobile station, wherein
in this preceding step, transmission of the downlink signal via the physical downlink data channel is stopped when there is no downlink data signal for a specific cell that should be transmitted.

16. A simulation method, comprising:
a step A of assigning a first frequency direction resource by which to transmit a downlink data signal for a first cell, and a second frequency direction resource by which to transmit a downlink data signal for a second cell; and
a step B of transmitting the downlink data signal for a first cell by the first frequency direction resource, and the downlink data signal for a second cell by the second frequency direction resource, in the form of a simulation signal, to a mobile station, wherein
in the step A, a predetermined number of frequency direction resources centered on the frequency direction resource in the center are not assigned, out of the frequency direction resources that can be used, for transmitting the downlink signal for a first cell and the downlink signal for a second cell, as the first frequency direction resource and the second frequency direction resource.
